# EUROPEAN PATENT SPECIFICATION

(11) **EP 0 708 891 B1**
(45) Date of publication and mention of the grant of the patent: **04.02.1998**
(21) Application number: 93920603.3
(22) Date of filing: 17.09.1993
(51) Int. Cl.: F16B 43/00, F16B 31/02, F16B 31/04

(54) **HYDRAULICALLY ASSISTED FASTENERS**
HYDRAULISCH UNTERSTÜTZTE BEFESTIGUNGSVORRICHTUNGEN
FIXATIONS ASSISTEES HYDRAULIQUEMENT

(30) Priority: 17.09.1992 AU PL4777/92
(43) Date of publication of application: 01.05.1996
(73) Proprietor: BUCKNELL, John Wentworth, Indooroopilly, QLD 4068 (AU)
(72) Inventor: BUCKNELL, John Wentworth, Indooroopilly, QLD 4068 (AU)
(74) Representative: Prüfer, Lutz H., Dipl.-Phys.
(86) International application number: AU9300477
(87) International publication number: WO9407042

(56) References cited:
- EP-A- 0 129 440
- GB-A- 991 783
- GB-A- 2 236 372
- US-A- 4 281 580

## Description

### FIELD OF THE INVENTION

THIS INVENTION relates to hydraulically assisted fasteners.

### BACKGROUND OF THE INVENTION

Materials handling equipment, as is used in the mining and like industries, is subject to extreme vibration and harsh operating conditions. The fasteners used in holding the components of this equipment together are required to hold against all stresses met in operation of the equipment. Various fasteners have been developed by which the components of materials handling equipment may be held together. It is known to provide hydraulically assisted nuts by which to clamp components together by means of the nut and a suitable bolt. In general, these nuts are complex structures requiring considerable effort in fabrication to raise costs.

The GB-A-991783 discloses a hydraulically assisted fastener according to the preamble of claim 1.

### OBJECT OF THE INVENTION

It is an object of the invention to provide hydraulically assisted fasteners which achieve their object with a reduced inventory of componentry and at reduced costs.

### NATURE OF THE INVENTION

An hydraulically assisted fastener for attachment to a connector element passed through a part to be held by the fastener when attached thereto comprising:
a connector body with a bore therein for operative interaction with the connector element;
an annular recess in the connector body; said annular recess being configured for receipt of a pressure means therein; and
a pressure means mounted in the annular recess, expanded, when subjected to hydraulic pressure therein in use, to apply a force on the connector body, and thereby to the connector element, and to the surface of the part which the fastener abuts,
characterised in that
said annular recess is open to the bore.

The pressure means is preferably an annular hollow plastic or like part which is provided with an inlet at which an apparatus for delivering a hydraulic fluid such as grease or oil can be attached to enable the pressure means to be pressurised. The pressure means expands under pressure to fill out the space provided for it. The material of the pressure means can be chosen to have the ability to flow into the full volume provided for it.

### BRIEF DESCRIPTION OF THE DRAWINGS

The invention will now be described with reference to various preferred embodiments as shown in the accompanying drawings, wherein:
FIGS. 1 to 4 show in detailed views, the components of an hydraulically assisted fastener in accordance with the invention. FIG. 1 is a cross-section of an assembled nut, and FIGS. 2, 3 and 4 are details of the components of FIG. 1 with plan views (A) and sections (B);
FIGS. 5 to 8 show a second embodiment of the invention with FIG. 5 showing a cross-section of an assembled nut and FIGS. 6 to 8 being plan (A) and sections (B) of its component parts;
FIGS. 9 to 12 show a third embodiment, presented in the same format;
FIGS. 13 and 14 show details of a nipple which may be used in the above embodiments; and
FIGS. 15 to 17 show details of a particular embodiment of the means by which the hydraulically assisted fastener might be pressurised.

### PREFERRED EMBODIMENTS

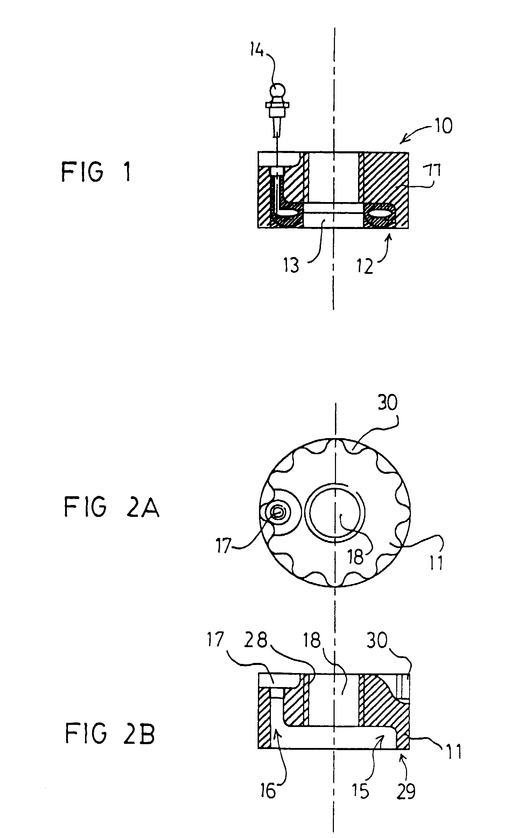

In FIG. 1 is a section through a hydraulically assisted fastener 10 comprised of a connector body 11 or shell, preferably configured as a nut able to be actioned by a spanner, having, nested in an annular recess therein, a pressure means, such as a bag, bladder, cell 13, or the like or other channel means as described below, above a thrust washer 12. Whilst the bladder is shown to be nested in a recess which is open to the bore in the nut body it will be clear that it could be loaded into a groove or channel in the nut body so as to not have the pressure means contacting a bolt shaft passed through the bore. In the recess system, the pressure means engages with the bolt to assist in resisting torsion. The thrust washer is a preferred feature in this embodiment. The fastener can be made to operate without it. A nipple 14 provides a means whereby a pressurised fluid might be pumped to the pressure means 13. Alternate means for delivering the pressure fluid will suggest themselves to those skilled in the art. As will become clear below, the geometry of the pressure cell, and the thrust washer, may be varied. The hydraulic fastener may be operated without use of the thrust washer or the thrust washer can be the element which is recessed to hold the pressure means.

FIGS. 2A and 2B show the body part or shell 11 from above and in vertical section. The connector body 11 has a recess 15 cut in the base about bore 18 with a passage 16 to shoulder 17 whereat a nipple (not shown) or the like can be attached to communicate with a pressure means nested in the recess 15.

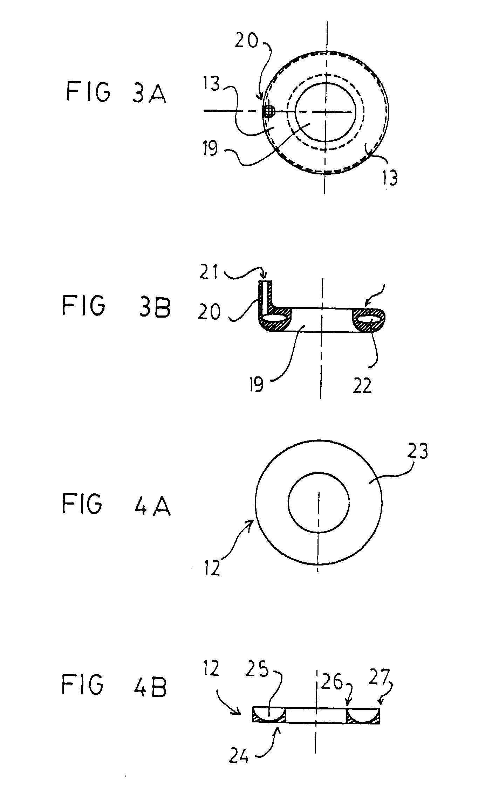

FIGS. 3A and 3B show a pressure means, bag, bladder or cell from above and in vertical section. The cell 13 has a central hole 19 co-axial with the bore 18 of the body part 11 and a neck 20 with opening 21 therein into internal space 22. The neck 20 extends, in use, into passage 16 of the body part 11 so that a nipple 14 (of FIG. 1) may be inserted into the neck 20 when fitted in passage 16.

FIGS. 4A and 4B show the configuration of a thrust washer 12 from above and in section. The thrust washer is a complementary annulus, co-axial, in use, with bore 18 of connector body 11 with its upper surface 23 cut concave into the body 24 of the thrust washer 12 to produce a concavity 25 between upstanding lips 26 and 27. In use the cell 13 nests into recess 15 and concavity 25 and their respective shapes are preferably complementary.

In use of the above hydraulically assisted fastener, the connector body is applied to a bolt or other like connector means with a thread engaged in a complementary thread in the bore 18 in the sidewalls 28 (see FIG. 2B) with the connector body screwed down so that its lower surface butts against a surface to be clamped by the fastener or a thrust washer therebetween. The scalloped head 30 (see FIGS. 2A and 2B) provides the means by which the body part might be engaged by a suitable tool (not shown), turned and mechanically tensioned. Clearly a variety of other geometries would suit this purpose. At this point, a pressurised fluid might be injected into the cell 13 to push against the surface to be clamped, or the thrust washer 12 against the surface to be clamped, with greater force. In this embodiment, the pressure means or cell expands against the thrust washer and the shaft of the connector element or bolt which the fastener acts on. It would be possible to make the annular recess as an annular groove (with walls on both sides) so that the pressure means or cell is isolated from the connector element.

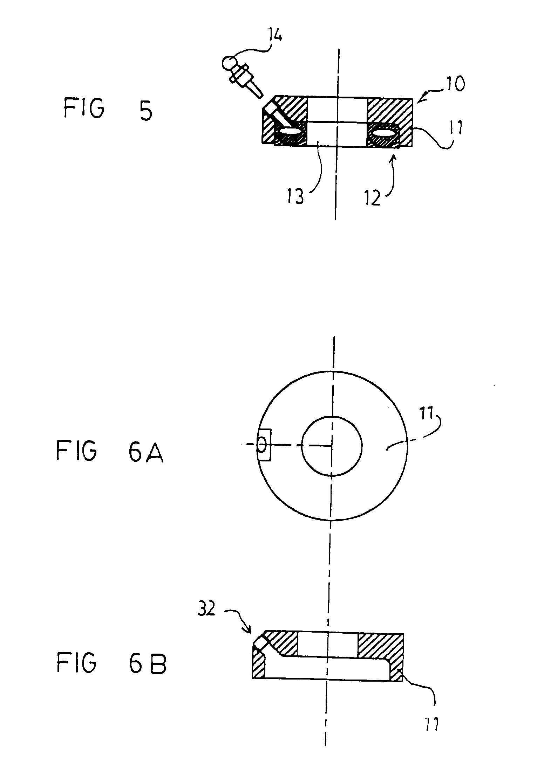

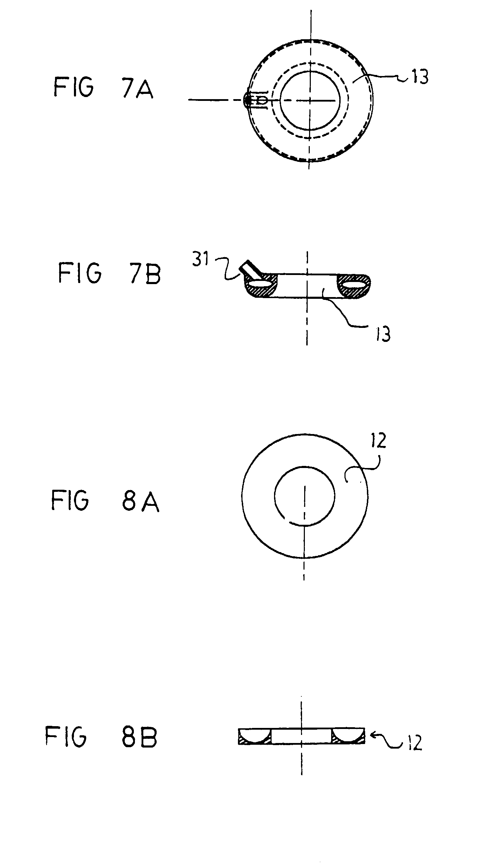

FIGS. 5 to 8 show a different form of hydraulically assisted fastener. In this embodiment, the hydraulic element comprises a washer to be used with, say a nut and bolt, as described above. This time the body part 11 serves as a washer, with a separate nut (not shown) providing the means to engage a bolt (not shown) and generate an hydraulic pressure. In this embodiment, the nipple 14 enters from the side of the washer and the neck 31 enters the washer at an oblique passage 32. Otherwise this embodiment is the same as the above described embodiment and it functions as the above nut does.

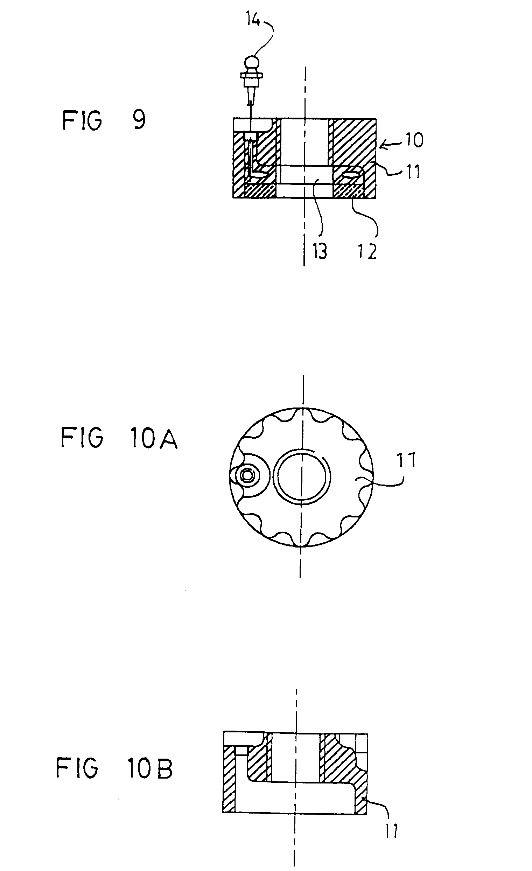

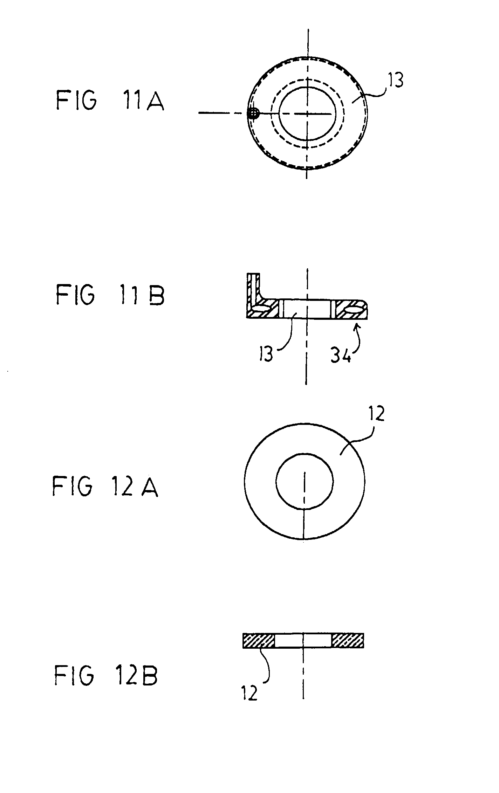

FIGS. 9 to 12 show another embodiment. The difference here is that the flat washer has no concavity and the cell 13 is provided with a flat base 34. The body part 11 may be either a threaded nut as in FIG. 1 or a washer as in FIG. 5.

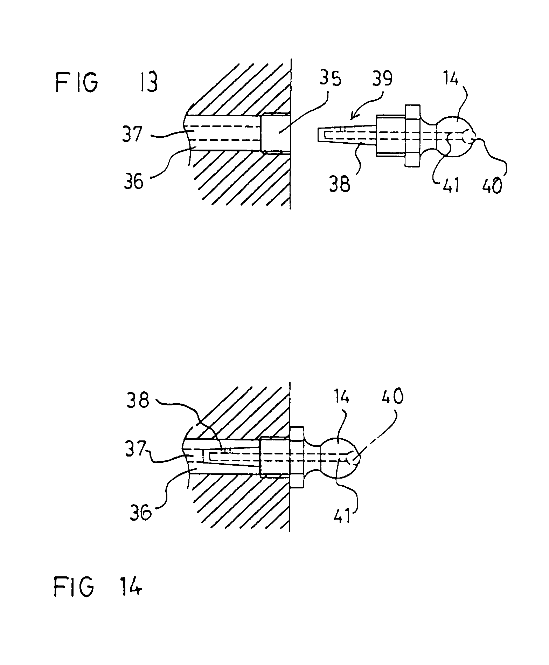

FIG. 13 shows a nipple 14 prior to insertion into passage 35 and the opening 37 of the neck 36 of a cell (not shown). FIG. 14 shows the same nipple in place. The neck 36 encompasses the shaft 38 of the nipple 14 to envelope hole 39 to passage 41 of nipple 14. The neck sleeved over the nipple shaft 38 provides a seal in addition to the usual ball 40 in passage 41. The nipple may be screwed into the bore therefor.

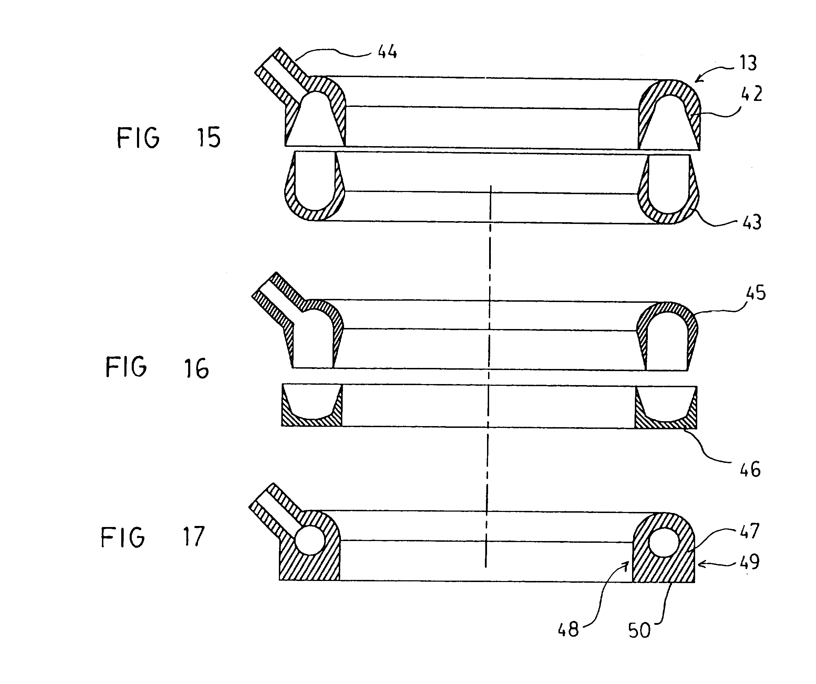

FIGS. 15 to 17 show various and different means whereby the pressure means or cell 13 of the above embodiments might be realised.

In FIG. 15, the pressure means 13 is a two-part construction with upper 42 and lower 43 preferably plastic components, nested together so as to create a space into which a pressurised fluid might be pumped, the two parts being held between the body part and thrust washer as before with neck 44 for application of a nipple (not shown). Under pressure, the initially separate parts will come together and act as a unit with their separate parts effectively welded to provide a sealed cavity into which pressurised fluid can be pumped, to squeeze the material of the parts into the volume they are fitted to, to cause pressure on the thrust washer or surface to be clamped in the same manner, as does a single piece pressure means or cell. Structures of this kind may be nested in a channel or groove to be supported at both sides in a nut body or within a thrust washer.

In FIG. 16, a one part open pressure means 45 nests inside a thrust washer 46 and the two parts create a cavity therebetween for pressurised fluid. On assembly, the lips of the pressure means 45 will be curved about and sealed to the inner face of the pressure washer to enclose a space therebetween.

In FIG. 17 is seen a pressure means 47 with respective sides 48 and 49, and a base surface 50 which engage with a central bolt, connector body cavity, and surface to be clamped.

The above described hydraulically assisted fasteners are designed to be an inexpensive means of applying high tensile loads to members such as bolts. The fasteners might be made in two but more usually three structural pieces. The connector body or outer shell is ideally formed by forging from steel. These casings can be made with a smooth bore to act as a washer or with a thread to act as a nut. The pressure cell can be a polyurethane "tyre" with an inner cavity to allow insertion, under pressure, of an oil or grease. A thrust washer is ideally forged or pressed from a flowable metal such as brass or aluminium. The hydraulic fitting is to suit a grease gun or similar means to inject grease or oil under pressure. When screwed into place it can form a non-return sleeve to retain the internal pressure. The pumping means can be any common or suitable pumping apparatus, or a direct displacement method such as a threaded forcing screw in a sealed cavity.

When pressurising media is introduced through the nipple, the polymeric insert itself behaves as a fluid to force the thrust washer against the face of the joint. The area of the annulus is calculated to be that which under a specific pressure will apply a predetermined force to the joint and the tensile member. As the pressure increases during a charging operation, the expanding polymer will crush any thin edge of the thrust washer against their abutting surfaces, eliminating any gap through which material might extrude. This action, and that of the polymer forcing against the walls of the body part and the shaft of a bolt, etc, provides a strong grip to resist the effects of vibration and the like. To check the force in the joint at any time in service, the specified pressure is applied. To remove the fastener, the nipple is removed, and the nut/washer is then removed in the normal manner.

In production of the above, the flat faced thrust washer requires greater attention to tolerances and surface finish of components than does the concave version. In a two part pressure cell, in operation, the two polymeric parts will be deformed into each other to create a sealed cavity, as will the single upper polymeric part being deformed into the concavity of a thrust washer. The versions which are to operate without thrust washers will be suitable for applications requiring lesser clamping forces and/or internal charge pressures.

In the above described devices there is a novel assembly of elements; a novel use of deformable thrust washer; a novel gripping action of the polymer insert; a novel inner cell; a novel means for achieving a pressure cavity; and a novel inlet valve. It will be clear to those skilled in the art that many variations of shape, dimension, and number of combined parts can be made within the scope of the invention herein, as set forth in the following claims.

The material for the pressure means may be a polyurethane or suitable grade polymeric material moulded to the required shape. A recessed nut system is a means to reduce inventory over a recessed thrust washer system as the thrust washer can otherwise be eliminated. The nipple of FIGS 13 and 14 can be off the shelf nipples mounted to a transition piece screwed into the nut body. Generally a single piece bladder is preferred as improved sealing exists with this system.

## Claims

1. An hydraulically assisted fastener (10) for attachment to a connector element passed through a part to be held by the fastener when attached thereto comprising:
a connector body (11) with a bore (18) therein for operative interaction with the connector element;
an annular recess (15) in the connector body (11), said annular recess (15) being configured for receipt of a pressure means (13) therein; and
a pressure means (13) mounted in the annular recess (15), expanded, when subjected to hydraulic pressure therein in use, to apply a force on the connector body (11), and thereby to the connector element, and to the surface of the part which the fastener (10) abuts,
characterised in that
said annular recess (15) is open to the bore (18).

2. An hydraulically assisted fastener as claimed in Claim 1 wherein a thrust washer is inserted between the pressure means and the said part.

3. An hydraulically assisted fastener as claimed in Claim 2 wherein the thrust washer has a concave surface facing the pressure means and it is deformable under pressure.

4. An hydraulically assisted fastener as claimed in any one of Claims 1 to 3 wherein the pressure means is an annular bladder adapted to receive a pressurised fluid therein.

5. An hydraulically assisted fastener as claimed in any one of Claims 1 to 3 wherein the pressure means comprises opposed annular parts provided with channels thereabout, open axially, the channelled parts mated one within the other to enclose an internal volume.

6. An hydraulically assisted fastener as claimed in Claims 1 to 3 wherein the pressure means is an annular part with a channel thereabout which is deformable to sealably inter-engage within a complementary channel in the connector body or the thrust washer.

7. An hydraulically assisted fastener as claimed in any one of Claims 1 to 3 wherein the connector body is a nut formed with a groove in an end face to form the recess therein wherein there is nested a pressure means, said connector body also provided with a bore therein to the groove whereat a means to feed hydraulic fluid is provided to pressurise the pressure means is installed.

8. An hydraulically assisted fastener as claimed in Claim 7 wherein the pressure means is a bladder nested in said groove with a filler neck from the bladder passed through said bore.

9. An hydraulically assisted fastener as claimed in Claim 8 wherein said neck to the bladder is open ended and a nipple for feeding pressurised fluid can be inserted therein and mounted in said bore.

10. An hydraulically assisted fastener as claimed in claim 3 wherein the pressure means is a polymeric bladder and the thrust washer is a metal such as brass.

## Patentansprüche

1. Hydraulisch unterstützte Befestigungsvorrichtung (10) zum Anbringen eines Verbindungselementes, das durch ein Teil geführt ist, das durch die Befestigungsvorrichtung gehalten wird, wenn es daran angebracht ist, mit:
einem Verbindungskörper (11) mit einer Bohrung (18) zum betriebsmäßigen Wechselwirken mit dem Verbindungselement;
einer ringförmigen Ausnehmung (15) in dem Verbindungskörper (11), wobei die ringförmige Ausnehmung (15) zum Aufnehmen eines Druckmittels (13) darin ausgelegt ist; und
einem Druckmittel (13), das in der ringförmigen Ausnehmung (15) angebracht ist, das darin bei der Benutzung ausgedehnt wird, wenn es hydraulischem Druck unterworfen wird, zum Ausüben einer Kraft auf den Verbindungskörper (11) und dadurch auf das Verbindungselement und auf die Oberfläche des Teiles, gegen das die Befestigungsvorrichtung (10) stößt;
dadurch gekennzeichnet,
daß die ringförmige Ausnehmung (15) zu der Bohrung (18) offen ist.

2. Hydraulisch unterstützte Befestigungsvorrichtung nach Anspruch 1, bei der eine Druckscheibe zwischen das Druckmittel und das Teil eingefügt ist.

3. Hydraulisch unterstützte Befestigungsvorrichtung nach Anspruch 2, bei der die Druckscheibe eine konkave Oberfläche aufweist, die dem Druckmittel zugewandt ist, und sie unter Druck deformierbar ist.

4. Hydraulisch unterstützte Befestigungsvorrichtung nach einem der Ansprüche 1 bis 3, bei der das Druckmittel eine ringförmige Blase ist, die zum Aufnehmen von unter Druck stehendem Fluid darin eingerichtet ist.

5. Hydraulisch unterstützte Befestigungsvorrichtung nach einem der Ansprüche 1 bis 3, bei der das Druckmittel gegenüberliegende ringförmige Teile aufweist, die mit Kanälen darum versehen sind, die axial offen sind, wobei die mit Kanälen versehenen Teile zueinander gehörig ineinander zum Einschließen eines inneren Volumens vorgesehen sind.

6. Hydraulisch unterstützte Befestigungsvorrichtung nach einem der Ansprüche 1 bis 3, bei der das Druckmittel ein ringförmiges Teil mit einem Kanal darum ist, das zum abdichtenden Ineingriffkommen mit einem Komplementärkanal in dem Verbindungskörper oder der Druckscheibe deformierbar ist.

7. Hydraulisch unterstützte Befestigungsvorrichtung nach einem der Ansprüche 1 bis 3, bei der der Verbindungskörper eine Mutter ist, die mit einer Rille in einer Endfläche gebildet ist zum Bilden der Ausnehmung darin, in der ein Druckmittel aufgenommen ist, wobei der Verbindungskörper auch mit einer Bohrung darin zu der Rille versehen ist, an der ein Mittel zum Zuführen von Hydraulikfluid vorgesehen ist zum Unterdrucksetzen des eingebauten Druckmittels.

8. Hydraulisch unterstützte Befestigungsvorrichtung nach Anspruch 7, bei der das Druckmittel eine Blase ist, die in der Rille aufgenommen ist, wobei ein Füllstutzen von der Blase durch die Bohrung geht.

9. Hydraulisch unterstützte Befestigungsvorrichtung nach Anspruch 8, bei der der Stutzen zu der Blase ein offenes Ende aufweist und ein Nippel zum Zuführen von Fluid unter Druck da eingefügt werden kann und in der Bohrung angebracht werden kann.

10. Hydraulisch unterstützte Befestigungsvorrichtung nach Anspruch 3, bei der das Druckmittel eine Polymerblase ist und die Druckscheibe ein Metall wie Bronze ist.

## Revendications

1. Dispositif de fixation hydrauliquement assisté (10) destiné à fixer un élément de connexion traversant une pièce qui doit être maintenue par le dispositif de fixation lorsqu'il est fixé à celui-ci, comprenant :
un corps de connexion (11) comportant un perçage (18) en vue d'une interaction fonctionnelle avec l'élément de connexion ;
un évidement annulaire (15) dans le corps de connexion (11), ledit évidement annulaire (15) étant configuré pour y recevoir des moyens de pression (13) ; et
des moyens de pression (13) montés dans l'évidement annulaire (15), dilatés, lorsqu'ils y sont soumis à une pression hydraulique en fonctionnement, pour appliquer une force sur le corps de connexion (11) et, ainsi, à l'élément de connexion, et à la surface de la pièce contre laquelle le dispositif de fixation (10) s'appuie,
caractérisé en ce que
ledit évidement annulaire (15) est ouvert vers le perçage (18).

2. Dispositif de fixation hydrauliquement assisté (10) selon la revendication 1, dans lequel une rondelle d'appui est introduite entre les moyens de pression (13) et ladite pièce.

3. Dispositif de fixation hydrauliquement assisté (10) selon la revendication 2, dans lequel la rondelle d'appui a une surface concave faisant face aux moyens de pression et peut se déformer sous la pression.

4. Dispositif de fixation hydrauliquement assisté (10) selon l'une quelconque des revendications 1 à 3, dans lequel les moyens de pression (13) consistent en une vessie annulaire apte à recevoir un fluide sous pression.

5. Dispositif de fixation hydrauliquement assisté (10) selon l'une quelconque des revendications 1 à 3, dans lequel les moyens de pression (13) comprennent des pièces annulaires opposées pourvues de canaux qui l'entourent, ouvertes axialement, les pièces à canaux s'appariant l'une à l'intérieur de l'autre afin d'enfermer un volume interne.

6. Dispositif de fixation hydrauliquement assisté (10) selon l'une des revendications 1 à 3, dans lequel les moyens de pression (13) sont une pièce annulaire comportant un canal qui l'entoure, qui peut se déformer pour venir en prise mutuelle de façon étanche à l'intérieur d'un canal complémentaire situé dans le corps de connexion ou dans la rondelle d'appui.

7. Dispositif de fixation hydrauliquement assisté (10) selon l'une quelconque des revendications 1 à 3, dans lequel le corps de connexion (11) est un écrou pourvu d'une rainure dans une face d'extrémité afin d'y former un évidement dans lequel sont logés des moyens de pression (13), dans lequel est installé ledit corps de connexion, pourvu également d'un perçage allant vers la rainure au niveau de laquelle des moyens pour acheminer le fluide hydraulique sont prévus pour mettre sous pression les moyens de pression (13).

8. Dispositif de fixation hydrauliquement assisté (10) selon la revendication 7, dans lequel les moyens de pression (13) sont une vessie logée dans ladite rainure, un tube de remplissage provenant de la vessie traversant ledit perçage.

9. Dispositif de fixation hydrauliquement assisté (10) selon la revendication 8, dans lequel ledit tube relié à la vessie est ouvert à son extrémité, et un raccord destiné à acheminer le fluide sous pression peut y être introduit et monté dans ledit perçage.

10. Dispositif de fixation hydrauliquement assisté (10) selon la revendication 3, dans lequel les moyens de pression (13) sont une vessie polymère et la rondelle d'appui est en métal tel que le laiton.
